# EUROPÄISCHE PATENTANMELDUNG

(11) **EP 1 100 183 A2**
(43) Veröffentlichungstag der Anmeldung: **16.05.2001**
(21) Anmeldenummer: 00123096.0
(22) Anmeldetag: 25.10.2000
(51) Int. Cl.: H02K 7/06

(54) **Elektromotorische Verstelleinrichtung**

(30) Priorität: 11.11.1999 DE 29919877 U
(71) Anmelder: Dewert Antriebs- und Systemtechnik GmbH & Co. KG, D-32278 Kirchlengern (DE)
(72) Erfinder: Finkemeyer, Horst, 49328 Melle (DE)
(74) Vertreter: Specht, Peter, Dipl.-Phys.

(57) **Zusammenfassung**

Eine elektromotorische Verstelleinrichtung (10), die mit wenigstens zwei Spindeln (11, 12) ausgestattet ist, soll so ausgelegt werden, daß die Verstellgeschwindigkeit eines angeschlossenen Bauteils erhöht wird, und daß im Bedarfsfall auch der Verstellweg gegenüber den bekannten Verstelleinrichtungen erhöht wird, wobei der benötigte Einbauraum nicht vergrößert oder nicht wesentlich vergrößert werden soll.

Erfindungsgemäß sind die Spindeln (11, 12) mit einem Antriebsmotor (17) antriebstechnik gekoppelt und parallel und im Abstand zueinander angeordnet. Die Spindeln sind von zwei getriebenen Antriebsrädern (15, 16) antreibbare, wobei die beiden Antriebsräder (15, 16) mit einem von dem Antriebsmotor (17) angetriebenen Rad (14) in Eingriff stehen. Die erfindungsgemäße elektromotorische Verstelleinrichtung ist besonders als Hubsäule verwendbar.

## Beschreibung

Die Erfindung betrifft eine elektromotorische Verstelleinrichtung mit wenigstens zwei rotierend antreibbaren Spindeln.

Bei den bisher bekannten Antrieben mit zwei rotierend antreibbaren Spindeln ist jede Spindel mit einem Antriebsgetriebemotor gekoppelt, so dass die Spindeln unabhängig voneinander angetrieben werden können. Derartige Verstelleinrichtungen werden beispielsweise eingesetzt, um das Kopf- und das Fussteil eines Lattenrostes zu verstellen. Die Spindeln stehen fluchtend zueinander. Auf jede Spindel ist eine gegen Verdrehung gesicherte Spindelmutter aufgesetzt, die langgestreckt ist. Jede Spindelmutter steht mit einem Hebel in Verbindung, der beispielsweise drehfest auf einer Achse oder Welle des zu verstellenden Möbelbauteils festgesetzt ist.

Es sind ferner sogenannte Einzelantriebe bekannt, die mit einer Spindel ausgerüstet sind, auf die eine Spindelmutter aufgesetzt ist. Außerdem sind Antriebe bekannt, bei denen bei Drehung der Spindel der Getriebemotor auf dieser verfährt. Die Drehzahlen der Spindeln bei den vorgenannten Verstelleinrichtungen sind relativ gering da der Antrieb über ein zwischen dem Antriebsmotor und der Gewindespindel liegenden Schneckentrieb erfolgt.

Derartige Antriebe haben sich in der Praxis bestens bewährt. Es besteht jedoch die Forderung, bei bestimmten Einsatzfällen die Geschwindigkeit des linear bewegbaren Abtriebsgliedes und gegebenenfalls auch den Verstellweg wesentlich zu erhöhen, beispielsweise zu verdoppeln, ohne das die Einbaumaße sich wesentlich vergrössern.

Der Erfindung liegt die Aufgabe zugrunde, eine elektromotorische Verstelleinrichtung der eingangs näher beschriebenen Art so zu gestalten, dass die Verstellgeschwindigkeit eines an die elektromotorische Verstelleinrichtung angeschlossenen Bauteiles erhöht wird, und dass im Bedarfsfalle auch der Verstellweg gegenüber den bekannten Verstelleinrichtungen erhöht, beispielsweise verdoppelt wird, ohne dass der benötigte Einbauraum vergrößert oder wesentlich vergrößert wird.

Die gestellte Aufgabe wird gelöst, indem die Spindeln mit einem einzigen Antriebsmotor antriebstechnisch gekoppelt sowie parallel und im Abstand zueinander angeordnet sind.

Bei der erfindungsgemässen Verstelleinrichtung können im Gegensatz zu den eingangs erläuterten beide Spindeln nur gleichzeitig angetrieben werden. Je nach der konstruktiven Gestaltung kann die Lineargeschwindigkeit des Abtriebsgliedes der Verstelleinrichtung wesentlich vergrößert werden, da sich die Geschwindigkeiten der durch die Spindel bewegten Bauteile summieren. Außerdem ist es möglich, dass bei einer entsprechenden Auslegung der Verstellweg vergrößert wird. Die erfindungsgemässe Verstelleinrichtung lässt sich vielfältig einsetzen. So ist es möglich, dass sie in eine Säule montiert wird, um beispielsweise die Tischplatte eines Arbeitstisches anzuheben. Außerdem könnte er in das aus einem Rohr bestehende Tischbein eines Tisches eingebaut werden.

Eine konstruktiv einfache Ausführung ergibt sich, wenn die Spindeln von in gleicher Anzahl vorhandenen Antriebsrädern antreibbar sind, die mit einem von dem Antriebsmotor angetriebenen Getriebeteil in Eingriff stehen. Dieses Rad ist dann das antreibende Rad des Antriebes für die Spindeln. Da auch bei der in Frage stehenden Verstelleinrichtung die Drehzahlen der Spindeln relativ gering sein sollen, ist vorgesehen, dass das aus dem treibenden Getriebeteil und den getriebenen Rädern gebildete Getriebe als Untersetzungsgetriebe ausgebildet ist. Dabei lässt sich ein besonders hohes Drehzahlverhältnis zwischen dem Abtriebszapfen des elektrischen Antriebsmotors und den Spindeln erreichen, wenn die getriebenen Antriebsräder für die Spindel baugleiche Schneckenräder sind, die in einem Winkelversatz von 180 Grad zueinander stehen, und wenn das vom Motor in Drehung versetzte, das treibende Getriebeteil ein Schneckenrad ist. Die beiden Spindeln werden dann gegenläufig angetrieben wobei für den Fall, dass die Schneckenräder baugleich sind die Drehzahlen übereinstimmen. Die Schneckenräder sind vorzugsweise mit halbgloboiden Verzahnungen versehen. Der Verstellweg und die Geschwindigkeit des an das Abtriebselement der Verstelleinrichtung angeschlossenen Bauteils wird gegenüber den bekannten Verstelleinrichtungen wesentlich vergrößert, wenn ein Schneckenrad eine als Bewegungsgewinde gestaltete Innengewindebohrung aufweist, die mit der ersten Spindel in Eingriff steht und wenn das andere Schneckenrad drehfest mit der zweiten Spindel verbunden ist. Es ergeben sich dann mehrere Möglichkeiten für die Verstellung. So ist es möglich, dass die erste Gewindespindel unverdrehbar ist, so dass das aufgesetzte Schneckenrad auf der ersten Gewindespindel verfahrbar ist. Beim Eisatz der Verstelleinrichtung für eine Hubsäule oder für ein Tischbein könnte dann die in der Höhe zu verstellende Tischplatte über Koppelelemente mit der zweiten Gewindespindel verbunden sein. Es müsste dann dafür gesorgt werden, dass das aus der Schnecke und den beiden Schneckenrädern sowie dem Antriebsmotor bestehende Getriebe in einer Führung der Säule oder des Tischbeins geführt ist. Bei einer zweiten Ausführung ist vorgesehen, dass das aus den Schneckenrädern und der Schnecke gebildete Getriebe ortsfest angeordnet ist, so dass die erste Gewindespindel gegenüber dem zugehörigen Schneckenrad linear verfahrbar ist. Um bei einer solchen Ausführung die Verstellgeschwindigkeit und den Verstellweg zu erhöhen, ist es dann notwendig, dass das die Verstelleinrichtung umgebende Rohr teleskopierbar ist.

Bei der in Rede stehenden Verstelleinrichtung wird im Normalfall die zweite drehfest mit dem antreibenden Schneckenrad verbundene Spindel mit dem zu verstellenden Bauteil, beispielsweise einer Tischplatte über zusätzliche Bauteile verbunden. Es ist deshalb vorgesehen, dass auf diese zweite Spindel eine gegen Drehung gesicherte Spindelmutter aufgesetzt ist, die ausschließlich linear verfahrbar ist. Dabei ist es dann zweckmässig, wenn die Spindelmutter mit einem ein- und ausfahrbaren Hub- oder Schubrohr verbunden ist. In ein das Hub- oder Schubrohr umgebendes Flanschrohr ist dann eine Lochschiene eingesetzt, auf die zur Begrenzung der Endstellungen der Spindelmutter Endschalter eingesetzt sind. Die Lage der Endschalter kann verändert werden, so dass nicht die volle Verfahrbarkeit ausgenutzt werden muß, wenn bei einem Anwendungsfall der volle Weg nicht ausgenutzt werden kann oder soll. Im vorliegenden Fall sind die Endschalter hubbestimmend für den gesamten Antrieb. Die Endschalter können auch an anderen Stellen angeordnet werden.

In weiterer Ausgestaltung ist vorgesehen, dass die Spindeln mit ihren den Schnekkenrädern zugeordneten Endbereichen in beidseitig der Schneckenräder angeordneten Lagern, vorzugsweise Wälzlagern gelagert sind. Dadurch wird jede Spindel hinreichend gelagert. Damit der Abstand zwischen der ersten und der zweiten Spindel möglichst gering ist, so dass sich eine äußerst kompakte Bauweise ergibt, ist vorgesehen, dass die Lager zur Lagerung jeder Spindel unterschiedliche Durchmesser haben und das die sich diagonal gegenüberliegenden Lager den gleichen Durchmesser haben. Die mit der antreibenden Schnecke in Eingriff stehenden Schneckenräder sind um einen Winkel von 180 Grad zueinander versetzt. Damit Befestigungselemente zugänglich sind, ist vorgesehen das die senkrecht zur Drehachse der Schnecke stehenden Mittelebenen der Schneckenräder zueinander versetzt sind. Dabei ist der Versatz jedes Schneckenrades zur Drehachse der Schnecke jeweils gleich. Dieser Versatz lässt sich konstruktiv in einfachster Weise erreichen, wenn die Umfangsverzahnung der Schneckenräder halb-globoid ist. In bevorzugter Weise sind die Steigungen der Spindeln gleich, sie können jedoch auch voneinander abweichen. Die elektromotorische Verstelleinrichtung kann so ausgelegt sein, dass sie in sich selbst hemmend ist. Sofern jedoch damit zu rechnen ist, dass auf das zu verstellende Bauteil extrem große Kräfte wirken, könnte die Verstelleinrichtung auch mit einer Haltebremse, beispielsweise in Form von wenigstens einer Schlingfeder ausgerüstet sein. Sofern die elektromotorische Verstelleinrichtung so ausgelegt ist, dass sie in sich nicht selbsthemmend ist, ist ohnehin eine geeignete Bremse notwendig.

Es ist jedoch nicht notwendig, daß die Endstellungen der linear bewegbaren Bauteile, beispielsweise die Spindelmutter oder das Hub- bzw. Schubrohr durch Endschalter bestimmt werden, sondern es ist ebenfalls möglich, daß die Endstellungen der linear verfahrbaren Bauteile des Antriebes durch jeweils eine mechanische Blockiereinrichtung erfolgt, vorzugsweise durch einen ortsfesten oder verstellbaren Anschlag, der mit einer eine Abschaltung des Antriebes bewirkenden elektrischen Meßeinrichtung zusammenwirkt. Wenn das jeweilige linear verfahrbare Bauteil gegen die Blockiereinrichtung fährt, steigt die vom Antriebsmotor aufgenommene Stromstärke an. Dieser Anstieg der Stromstärke kann als Signal verwendet werden, um den Antrieb abzuschalten.

Gemäß einer weiteren Ausführungsform können die Endstellungen durch elektrische und/oder optische Erkennungseinrichtungen bestimmt werden, bevorzugt werden berührungslose Taster o.dgl. verwendet. Ferner ist es denkbar, daß zur Bestimmung der Endstellungen der linear bewegbaren Bauteile Positionserfassungseinrichtungen verwendet werden, die so ausgelegt sind, daß der Antrieb abgeschaltet wird, wenn die linear bewegbaren Bauteile sich in einer vorgegebenen Position befinden. Gemäß einer weiteren Ausführungsform könnten die Umdrehungen der rotierend antreibbaren Bauteile ermittelt und ggf. gespeichert werden, so daß durch eine Auswerteinheit ein Signal zum Abschalten des Antriebes gegeben wird, wenn sich das linear bewegbare Bauteil in einer vorgegebenen Position befindet. Die linear bewegbaren Bauteile sind bei den in Rede stehenden Verstelleinrichtungen der Rotor des Antriebsmotors oder die Spindel. Es könnten jedoch auch die Umdrehungen der Getriebeteile des Untersetzungsgetriebes ermittelt werden. Die besten Meßergebnisse werden jedoch erzielt, wenn die Umdrehungen derjenigen Getriebeteile ermittelt werden, die vor dem Untersetzungsgetriebe liegen. Ferner ist es denkbar, daß der Weg gemessen, den die linear bewegbaren Bauteile zurücklegen.

An Hand der beiliegenden Zeichnungen wird die Erfindung noch näher erläutert: Es zeigen:
Figur 1 die erfindungsgemässe elektromotorische Verstelleinrichtung in einer perspektivischen Darstellung,
Figur 2 die montierte elektromotorische Verstelleinrichtung gemäss der Figur 1 in einem Längsschnitt,
Figur 3 eine Möglichkeit der Verstellbarkeit der ausfahrbaren Teile und
Figur 4 eine Einzelheit in Schnittdarstellung, die beiden mit der Schnecke in Eingriff stehenden Schneckenräder.

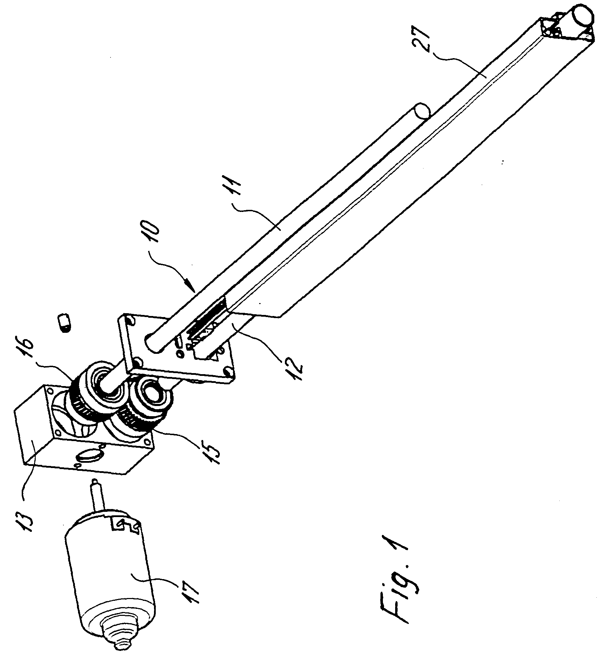

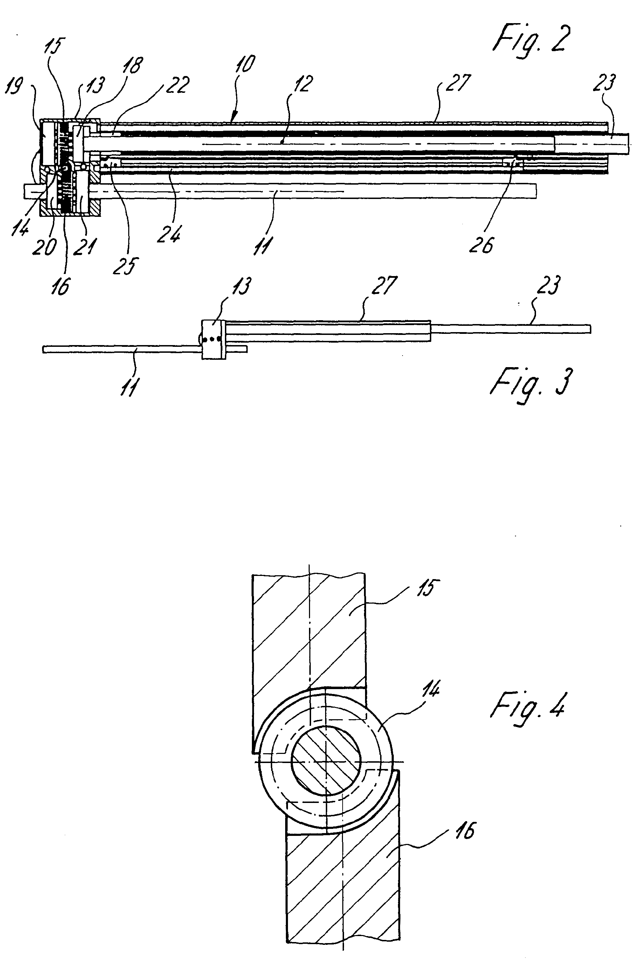

Die in der Figur 1 dargestellte elektromotorische Verstelleinrichtung 10 könnte auch als Linearantrieb bezeichnet werden, der wie ein Teleskopantrieb arbeitet. Die elektromotorische Verstelleinrichtung 10 ist mit einer ersten Spindel 11 und einer zweiten Spindel 12 ausgestattet, die parallel und im Abstand zur ersten Spindel 11 steht. Ein Ende der beiden Spindeln 11, 12 liegt im zusammengefahrenen Zustand gemäss der Figur 2 in einem Gehäuse 13. In diesem Gehäuse ist ausserdem ein Getriebeteil in Form einer Schnecke 14 und zwei damit im Eingriff stehende Antriebsrädern in Form von Schneckenrädern 15, 16 gelagert. Die Schnecke 14 wird von einem an das Gehäuse 13 angeflanschten Elektromotor 17 angetrieben, der ein Gleichstrommotor ist. Der Abtriebszapfen des Elektromotors 17 ist in der dargestellten Ausführung als Schnecke 14 ausgebildet. Im dargestellten Ausführungsbeispiel sind die beiden Schneckenräder 15, 16 baugleich, so dass sich die Spindeln 11, 12 entgegengesetzt drehen. Die beiden Spindeln 11, 12 sind jeweils durch zwei beidseitig der Schneckenräder 15, 16 angeordneten Wälzlagern 18, 19/20, 21 gelagert. Die Außendurchmesser der beiden Lager zur Lagerung jeder Spindel 11 bzw. 12 sind unterschiedlich, wobei gemäss der Darstellung nach der Figur 2 der Durchmesser des Lagers 18 mit dem des Lagers 20 und der Durchmesser des Lagers 19 mit dem des Lagers 21 übereinstimmt. Die diagonal angeordneten Wälzlager 18/20 bzw. 19/21 sind dem zufolge baugleich. Dadurch wird der Abstand zwischen der ersten Spindel 11 und der zweiten Spindel 12 so gering wie möglich gehalten, so dass die elektromotorische Verstelleinrichtung äußerst kompakt ist.

Das der ersten Spindel zugeordnete Schneckenrad 16 ist mit einer Innengewindebohrung versehen. Dieses Gewinde ist ein Bewegungsgewinde, so dass sich bei Drehung des Schneckenrades 16 die erste Spindel 11 im dargestellten Ausführungsbeispiel nach links bewegen würde, sofern das Gehäuse 13 ortsfest und die Spindel 11 drehfest montiert ist. Wie die Figur 3 zeigt, kann jedoch die erste Spindel 11 so montiert werden, dass sie sich nicht drehen kann, das heißt sie ist nicht in ihrer Längsrichtung verfahrbar. In diesem Falle würde sich das Gehäuse 13 nach rechts bewegen. Bei eingeschaltetem Elektromotor 17 wird gleichzeitig auch das Schnekkenrad 15 angetrieben, wodurch die zweite Spindel 12 ebenfalls in Drehung versetzt wird. Auf die zweite Spindel 12 ist eine Spindelmutter 22 aufgedreht, die gegen Drehung gesichert ist, so dass sie sich in Längsrichtung der zweiten Spindel 12 bewegen kann. Die Spindelmutter 22 ist mit einem Schub- oder Hubrohr 23 verbunden, welches synchron mit der Spindelmutter 22 bewegbar ist. In nicht näher dargestellter Weise ist das Schub- oder Hubrohr 23 über Anschlussteile mit dem zu verstellenden Bauteil, beispielsweise einer Tischplatte gekoppelt. In dem ein das Schub- oder Hubrohr 23 umgebendes Flanschrohr 27 ist noch eine Lochschiene 24 installiert, in die zwei Endschalter 25, 26 eingesteckt sind. Dadurch werden die beiden Endstellungen der Spindelmutter 22 vorgegeben.

Die Figur 4 zeigt, dass die senkrecht zur Drehachse des Schneckenrades 14 stehenden Mittelebenen der Schneckenräder 15, 16 im gleichen Versatz zur Drehachse des Schneckenrades 14 stehen. Dadurch werden Freiräume geschaffen, um beispielsweise Befestigungselemente zugänglich zu machen. Die äußere Umfangsverzahnung jedes Schneckenrades 15, 16 ist eine halb globoide Verzahnung. Die Gewindeform der Spindeln kann eine der üblichen Gewindearten sein, beispielsweise Trapez- oder Spitzgewinde. Die Steigungen der beiden Spindeln 11, 12 können gleich oder auch voneinander abweichen. Je nach Anwendungsfall könnten die Steigungen gleich- oder gegensinnig sein. Beim Einschalten des Antriebsmotors 17 werden die beiden Spindeln 11 und 12 über das Schneckenrad 14 und die beiden Schneckenräder 15, 16 gegenläufig angetrieben. Gemäss der Darstellung nach der Figur 3 ist in nicht näher dargestellter Weise die erste Spindel 11 nicht drehbar, so dass sich bei Drehung des Schneckenrades 16 das Gehäuse 13 auf der ersten Spindel 11 verschiebt. Gleichzeitig wird jedoch auch das Hub- oder Schubrohr 23 ausgefahren. Dadurch wird die Geschwindigkeit und der Verfahrweg größer als bei den bekannten Antrieben. Wird die Verstelleinrichtung 10 in eine Säule oder ein Bein eingebaut, muß sichergestellt sein, dass das Gehäuse 13 innerhalb der Säule oder des Beines geführt wird, damit es sich nicht verdrehen kann. Im Gegensatz zu der dargestellten Ausführung ist es jedoch auch möglich, dass das Gehäuse 13 innerhalb der Säule oder eines Beines ortsfest angeordnet ist. In diesem Falle müßte die Säule oder das Bein zur Erhöhung der Geschwindigkeit und des Verfahrweges teleskopierbar sein. Ein weiterer Vorteil dieser Verstelleinrichtung ist noch, dass das zu übertragende Drehmoment auf die erste Spindel 11 und die zweite Spindel 12 verteilt wird, so dass entweder die Lebensdauer der Spindeln erhöht werden kann, oder das bei einer vorgegebenen Lebensdauer die Abmessungen verringert werden können bzw. ein qualitativ schlechterer Werkstoff verwendet werden kann. An das Gehäuse 13 ist das feststehende Flanschrohr 27 angesetzt. Die Erfindung ist nicht auf das dargestellte Ausführungsbeispiel beschränkt. Wesentlich ist die achsparallele Anordnung der beiden Spindeln 11, 12 und das diese Spindeln von einem einzigen Elektromotor 17 über ein Untersetzungsgetriebe angetrieben werden.

## Patentansprüche

1. Elektromotorische Verstelleinrichtung mit wenigstens zwei rotierend antreibbaren Spindeln, **dadurch gekennzeichnet, dass** die Spindeln (11, 12) mit einem Antriebsmotor (17) antriebstechnisch gekoppelt sowie parallel und im Abstand zueinander angeordnet sind.

2. Elektromotorische Verstelleinrichtung nach Anspruch 1, **dadurch gekennzeichnet, dass** die Spindeln (11, 12) von in gleicher Anzahl vorhandenen Antriebsrädern (15, 16) antreibbar sind, die mit einem von dem Antriebsmotor (17) angetriebenen Getriebeteil (14) in Eingriff stehen.

3. Elektromotorische Verstelleinrichtung nach Anspruch 2, **dadurch gekennzeichnet, dass** die getriebenen Antriebsräder für die Spindeln (11, 12) vorzugsweise baugleiche Schneckenräder (15, 16) sind , die im Winkelversatz von 180 Grad zueinander angeordnet sind und mit einer von dem Elektromotor (17) antreibbaren Schnecke (14) in Eingriff stehen, und daß Schneckenräder (15, 16) eine halbgloboide Verzahnung aufweisen.

4. Elektromotorische Verstelleinrichtung nach einem oder mehreren der vorhergehenden Ansprüche 1 bis 3, **dadurch gekennzeichnet, dass** ein Antriebsrad (16) eine als Bewegungsgewinde gestaltete Innengewindebohrung aufweist, die mit der ersten Spindel (11) in Eingriff steht.

5. Elektromotorische Verstelleinrichtung nach einem oder mehreren der vorhergehenden Ansprüche 1 bis 4, **dadurch gekennzeichnet, dass** das andere Antriebsrad (15) drehfest mit der zweiten Spindel (12) verbunden ist.

6. Elektromotorische Verstelleinrichtung nach einem oder mehreren der vorangegangenen Ansprüche 1-5, **dadurch gekennzeichnet, dass** die erste Spindel (11) unverdrehbar ist, so dass das aufgesetzte Antriebsrad (16) des Getriebes auf der Spindel (11) verfahrbar ist.

7. Elektromotorische Verstelleinrichtung nach einem oder mehreren der vorhergehenden Ansprüche 1-5, **dadurch gekennzeichnet, dass** das aus den Antriebsrädern (15, 16) und dem Getriebeteil (14) gebildete Getriebe vorzugsweise in einem Gehäuse ortsfest angeordnet ist, so dass die erste Gewindespindel (11) gegenüber dem antreibenden Antriebsrad (16) verfahrbar ist.

8. Elektromotorische Verstelleinrichtung nach Anspruch 6, **dadurch gekennzeichnet, dass** die elektromotorische Verstelleinrichtung (10) in einer festen Säule, in einem Tischbein oder in einem teleskopierbaren Bein angeordnet ist.

9. Elektromotorische Verstelleinrichtung nach einem oder mehreren der vorhergehenden Ansprüche 1-8, **dadurch gekennzeichnet, dass** auf die zweite, drehfest mit dem antreibbaren Antriebsrad (15) verbundene zweite Spindel (12) eine gegen Drehung gesicherte, ausschließlich in Längsrichtung der Spindel (12) verfahrbare Spindelmutter (22) aufgesetzt ist, die vorzugsweise mit einem Huboder Schubrohr (23) verbunden ist.

10. Elektromotorische Verstelleinrichtung nach einem oder mehreren der vorhergehenden Ansprüche 1-9, **dadurch gekennzeichnet, dass** die Spindeln (11, 12) mit ihren den Antriebsrädern (15, 16) zugeordneten Endbereichen in beidseitig der Antriebsräder (15, 16) angeordneten Lagern (18-21) gelagert sind.

11. Elektromotorische Verstelleinrichtung nach Anspruch 10, **dadurch gekennzeichnet, dass** die beiden Lager (18, 19) zur Lagerung einer Spindel (12) und die beiden Lager (20, 21) zur Lagerung der Spindel (11) unterschiedliche Aussendurchmesser aufweisen und das zur Reduzierung des Abstandes der beiden Spindeln (11, 12) die sich diagonal gegenüberliegenden Lager (18, 20) und (19, 21) im Duchmesser gleich sind.

12. Elektromotorische Verstelleinrichtung nach einem oder mehreren der vorhergehenden Ansprüche 1-13, **dadurch gekennzeichnet, dass** die senkrecht zur Drehachse der Schnecke (14) stehenden Mittelebenen der Antriebsräder (15, 16) gegeneinander versetzt sind und vorzugsweise im gleichen Versatz zur Drehachse des Getriebeteils (14) stehen.

13. Elektromotorische Verstelleinrichtung nach einem oder mehreren der vorhergehenden Ansprüche 1 bis 12,, **dadurch gekennzeichnet, dass** innerhalb des Flanschrohres (27) Endschalter (25, 26) zur Bestimmung des Gesamthubes der Verstelleinrichtung (10) angeordnet sind.

14. Elektromotorische Verstelleinrichtung nach einem oder mehreren der vorhergehenden Ansprüche 1-12, **dadurch gekennzeichnet, dass** die Endstellungen der linear verfahrbaren Bauteile (22, 23) der Verstelleinrichtung (10) durch jeweils eine mechanische Blockiereinrichtung erfolgt, der eine die Abschaltung des Antriebes bewirkenden elektrischen Meßeinrichtung zugeordnet ist.

15. Elektromotorische Verstelleinrichtung nach einem oder mehreren der vorhergehenden Ansprüche 1 bis 12, dadurch gekennzeichnet, daß die Endstellungen der linear verfahrbaren Bauteile (22, 23) der Verstelleinrichtung (10) durch jeweils eine elektrische und/oder optische Erkennungseinrichtung festlegbar ist, die ein Abschalten des Antriebes bewirkt.

16. Elektromotorische Verstelleinrichtung nach einem oder mehreren der vorhergehenden Ansprüche 1 bis 12, dadurch gekennzeichnet, daß die Verstelleinrichtung zur Bestimmung der Endstellungen der linear bewegbaren Bauteile durch eine den Weg der linear bewegbaren Bauteile ermittelnde Meßeinrichtung bestimmbar ist.

17. Elektromotorische Verstelleinrichtung nach einem oder mehreren der vorhergehenden Ansprüche 1 bis 12, dadurch gekennzeichnet, daß die Verstelleinrichtung (10) mit einer die Umdrehungen der rotierende antreibbaren Bauteile ermittelnden Einrichtung ausgestattet ist, und daß ggf. die Meßwerte gespeichert und mittels einer Auswerteinheit auswertbar sind.
